# EUROPÄISCHE PATENTSCHRIFT

(11) **EP 1 256 275 B1**
(45) Veröffentlichungstag und Bekanntmachung des Hinweises auf die Patenterteilung: **12.10.2005**
(21) Anmeldenummer: 02450115.7
(22) Anmeldetag: 07.05.2002
(51) Int. Cl.: A01M 21/04, E01H 11/00

(54) **Vorrichtung zum Auslichten von Wildkräutern**
Device for eliminating weeds
Dispositif pour éliminer les adventices

(30) Priorität: 11.05.2001 AT 3792001 U
(43) Veröffentlichungstag der Anmeldung: 13.11.2002
(73) Patentinhaber: Simek, Erwin, 3001 Mauerbach (AT)
(72) Erfinder: Simek, Erwin, 3001 Mauerbach (AT)
(74) Vertreter: Babeluk, Michael

(56) Entgegenhaltungen:
- EP-A- 0 026 248
- US-A- 3 919 806
- US-A- 4 323 136
- US-A- 4 952 222

## Beschreibung

Die Erfindung betrifft eine Vorrichtung zum Auslichten von Wildkräutern gemäß dem Oberbegriff des Anspruchs 1, mit einem Gehäuse, das mit Rollen in einem vorbestimmten Abstand über den Boden zu führen ist, in welchem Gehäuse eine Elektrode zur Aufnahme einer Hochspannung vorgesehen ist, und mit Erdkontakten zur Herstellung einer Erdung, sowie mit einer Stromversorgungseinrichtung, die eine Hochspannung zwischen der Elektrode und den Erdkontakten aufbaut, um Wildkräuter durch Stromschläge abzutöten, siehe z.B. Dokument US-A-3,919,806 .

In der biologischen Landwirtschaft stellt die Auslichtung von Wildkräutern ein immer größer werdendes Problem dar. So werden Weideflächen für Nutztiere beispielsweise zunehmend von schnellwachsenden Pflanzen wie Ampfer überwuchert, die für die Nutztiere ungenießbar sind. Auf diese Weise wird der Ertrag verringert und es entstehen Produktionsausfälle. In der biologischen Landwirtschaft, die auf den Einsatz von chemischen Bekämpfungsmitteln verzichtet, sind solche Probleme sehr schwer in den Griff zu bekommen.

Aus der US 4,094,095, der US 3,919,806, der US 4,428,150 und der WO 98/07314 sind Vorrichtungen bekannt, mit denen Wildkräuter durch Anwendung von elektrischem Strom bekämpft werden können. Grundprinzip ist dabei die Tatsache, dass bestimmte Wildkräuter schneller wachsen als Nutzpflanzen, wie etwa Gras oder Getreide, und dass die Stromzufuhr so eingestellt wird, dass nur die Wildkräuter vernichtet werden. Um eine wirksame Schädigung beziehungsweise Vernichtung der Wildkräuter zu erreichen, sind jedoch relativ hohe Spannungen erforderlich, die ein entsprechendes Gefährdungspotential darstellen. Aufgrund dieser Gefahren haben sich entsprechende Vorrichtungen in der Praxis bisher nicht durchgesetzt.

In der US 4,338,743 A und der US 4,338,744 A, sowie der EP 26 248 A sind Vorrichtungen der oben beschriebenen Art bekannt, die über Sicherheitseinrichtungen verfügen. Es hat sich jedoch herausgestellt, dass die bekannten Sicherheitseinrichtungen unzureichend sind.

Aufgabe der vorliegenden Erfindung gemäß Anspruch 1 ist es, diese Nachteile zu vermeiden und eine Vorrichtung der eingangs genannten Art so weiter zu bilden, dass ein sicherer Betrieb auch im Rahmen eines bäuerlichen Einsatzes möglich ist.

Erfindungsgemäß ist vorgesehen, dass im Bereich des Gehäuses Infrarotbewegungsmelder vorgesehen sind, um die Vorrichtung im Betrieb zu sichern. Wesentlich an der vorliegenden Erfindung ist, dass nicht nur die Vorrichtung selbst durch Isolation oder dergleichen ausreichend gesichert ist, sondern dass im Betrieb der Vorrichtung schon die Annäherung eines Menschen oder eines größeren Tieres wirksam verhindert wird. Sobald der Bewegungsmelder die Annäherung eines Menschen oder eines Tieres auf beispielsweise 10 Meter erfasst, wird die Stromzufuhr zu den Elektroden unterbrochen, um eine Gefährdung sicher auszuschalten. Dabei ist es an sich belanglos, ob sich der Mensch der Vorrichtung nähert oder die Vorrichtung auf einen Menschen hinfährt.

Besonders günstig zur Vernichtung von Wildkräutern hat es sich herausgestellt, wenn die Stromversorgungseinrichtung dazu ausgebildet ist, an der Elektrode eine negative Gleichspannung anzulegen. Überraschenderweise dringt eine negative Gleichspannung tiefer in das Erdreich ein und vernichtet auch den Wurzelbereich vollständig, so dass ein Nachwachsen der geschädigten Pflanzen sicher verhindert werden kann. Ein weiterer Vorteil besteht darin, dass mit geringeren Spannungen das Auslangen gefunden werden kann, was weiter zur Sicherheit beiträgt.

Erfindungsgemäß ist ein Metallsensor vorgesehen, um Metallgegenstände im Bereich der Elektrode zu erfassen. Auf diese Weise kann sicher ausgeschlossen werden, dass beispielsweise Drähte, die unbeabsichtigterweise am Boden liegen, von der Elektrode erfasst werden und dass damit die Gefährdung durch die Hochspannung auch an weiter entfernten Orten gegeben ist, die durch die Bewegungsmelder nicht abgesichert sind.

Eine weitere Erhöhnung der Sicherheit kann erreicht werden, wenn an den Rollen Druckschalter vorgesehen sind, die die Hochspannung unterbrechen, wenn die Vorrichtung vom Boden abgehoben wird.

Eine besonders gleichmäßige und effiziente Auslichtung von Wildkräutern kann erreicht werden, wenn die Elektrode als Draht oder Stange ausgebildet ist und in der Gebrauchsstellung der Vorrichtung waagrecht über dem Boden angeordnet ist.

In einer besonders begünstigten Ausführungsvariante der Erfindung ist vorgesehen, dass die Vorrichtung eine Kupplung zur Befestigung an einem selbstfahrenden Arbeitsgerät aufweist und dass im Gehäuse ein Generator vorgesehen ist, der über eine Zapfwelle vom Zugfahrzeug angetrieben ist. An sich ist es möglich die Hochspannung in der Stromversorgungseinrichtung dadurch zu erzeugen, dass in dem Gehäuse neben einem Generator auch eine Brennkraftmaschine zu dessen Antrieb vorgesehen ist. Dies stellt einen relativ großen Aufwand dar, und die Vorrichtung wird gleichzeitig schwer und unhandlich. Durch die oben beschriebene Ausbildung wird ein relativ kompakter Aufbau erreicht, da für den Antrieb des Generators innerhalb der Vorrichtung nicht mehr vorgesorgt werden muss. Besonders günstig ist es in diesem Zusammenhang, wenn an den Generator ein Transformator vorgesehen ist, um die Spannung am Ausgang des Generators auf einen Wert zwischen 500 und 20.000 Volt, vorzugsweise zwischen 700 und 12.000 Volt zu erhöhen. Auf diese Weise kann ein kostengünstiger handelsüblicher 230 Volt-Generator beziehungsweise 400 Volt-Generator verwendet werden und die Höhe der Spannung kann relativ leicht an die jeweiligen Bedürfnisse angepasst werden. Die notwendige Drehzahl für den Generator kann in einfacher Weise dadurch bereitgestellt werden, dass im Gehäuse ein Getriebe vorgesehen ist, das die Drehzahl der Zapfwelle zum Antrieb des Generators erhöht.

Eine weitere Erhöhung der Sicherheit insbesondere für den Betreiber der Vorrichtung selbst kann erreicht werden, wenn an einem Fahrersitz des Arbeitsgerätes ein Sensor vorgesehen-ist, der bei Verlassen des Fahrersitzes die Stromzufuhr unterbricht. Ein solcher Sensor verhindert auch die Inbetriebnahme der Vorrichtung wenn der Fahrer nicht am Fahrersitz Platz genommen hat und sich möglicherweise in einem Gefahrenbereich aufhalten könnte.

Eine alternative Ausführungsvariante der Erfindung sieht vor, dass die Vorrichtung zur Aufnahme auf einem Gleisfahrzeug vorgesehen ist und von diesem oder über eine Oberleitung mit Strom versorgt wird. Auf diese Weise können auch die Gleiskörper von Bahnanlagen ohne Einsatz von chemischen Vernichtungsmitteln frei von Wildkräutern gehalten werden, was zur Aufrechterhaltung einer guten Durchlüftung des Schotterbetts wichtig ist.

In der Folge wird die vorliegende Erfindung anhand eines in den Figuren dargestellten Ausführungsbeispiels näher erläutert. Es zeigen:

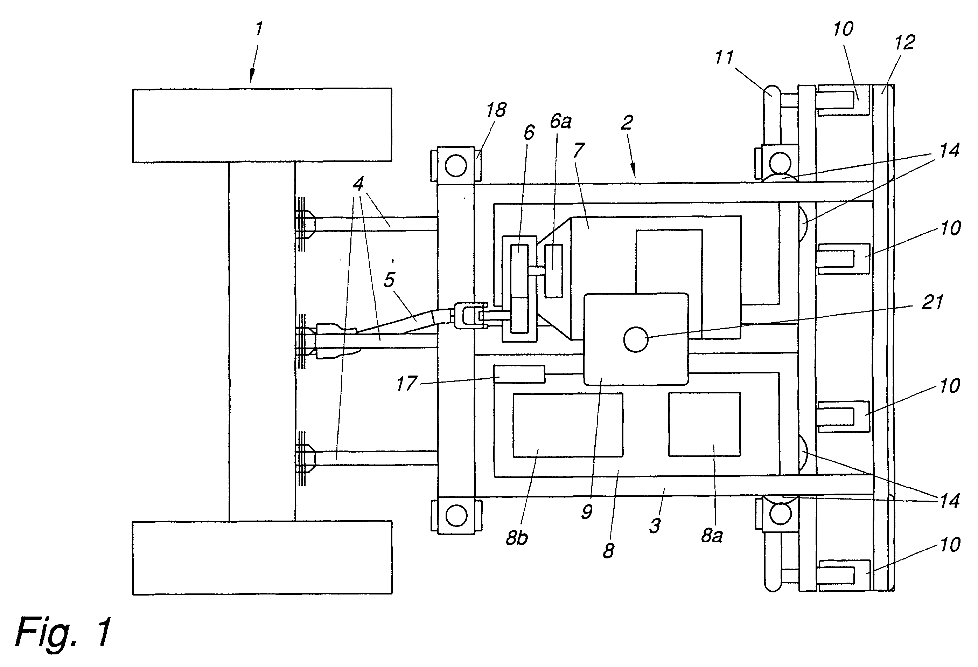

- Fig. 1: schematisch eine erfindungsgemäße Vorrichtung, die an einem Trä- gerfahrzeug befestigt ist in einer Draufsicht;

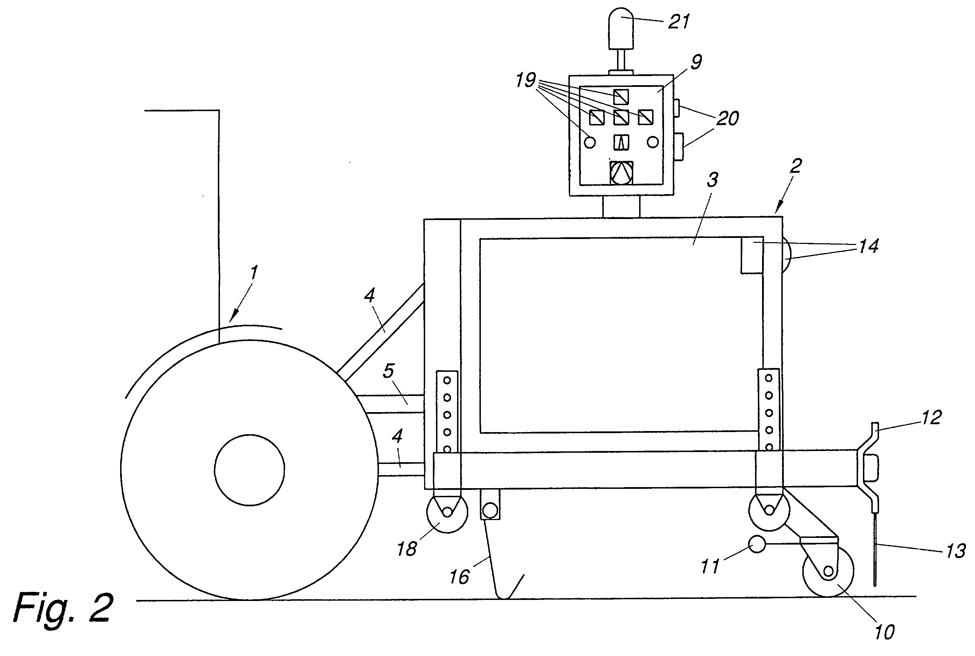

- Fig. 2: eine seitliche Ansicht der Vorrichtung von Fig. 1.

Eine selbstfahrende Arbeitsmaschine als Trägerfahrzeug ist mit 1 teilweise angedeutet. Dabei kann es sich um einen Traktor, um eine andere land- oder forstwirtschaftliche Maschine, aber auch um einen LKW oder eine Baumaschine handeln. Bei der dargestellten Ausführung ist die Vorrichtung, die allgemein mit 2 bezeichnet ist, in Fahrtrichtung vor dem Trägerfahrzeug 1 angeordnet. Es ist aber auch ein nachlaufender Betrieb grundsätzlich möglich. In speziellen Fällen kann die Vorrichtung auch seitlich des Trägerfahrzeugs 1 oder zwischen seinen Achsen vorgesehen sein.

Die Vorrichtung selbst besteht aus einem Gehäuse 3 mit einem verwindungssteifen Rahmen aus geschweißten U-Profilen. Über eine Aufhängung 4 ist die Vorrichtung 2 an dem Trägerfahrzeug 1 vertikal beweglich befestigt.

Die Antriebsenergie für den Betrieb der Vorrichtung wird über eine Zapfwelle 5 zugeführt, die an ein Getriebe 6 und eine elektromagnetische Kupplung 6a angekoppelt, das einen Generator 7 antreibt, der eine Spannung von 400 Volt erzeugt. In einem Transformator 8 mit einer Primärspule 8a und einer Sekundärspule 8b wird eine Hochspannung erzeugt. Mit einer Steuerungseinrichtung, die in einem Schaltschrank 9 aufgenommen ist, kann der Transformator 8 so gesteuert werden, dass die Hochspannung zwischen 500 und 20.000 Volt beträgt. Die Wechselspannung des Transformators 8 wird über einen Gleichrichter 17 in eine pulsierende Gleichspannung umgewandelt.

Die Höhe der Vorrichtung 2 über den Boden wird durch Rollen 10 festgelegt, die im vorderen Bereich vorgesehen sind. Eine Elektrode 11 zum Aufbringen der Hochspannung auf die Wildkräuter ist quer zur Fahrtrichtung und parallel zum Boden hinter den Rollen 10 befestigt. Ein Rammschutz 12 und ein umlaufender Gummivorhang 13 stellen eine einfach mechanische Sicherung der Vorrichtung 2 dar. Wesentlich sind jedoch Infrarotbewegungsmelder in der Form von Infrarotsensoren 14, die an mehreren Seiten des Gehäuses vorgesehen sind und die Annäherung von Menschen oder größeren Tieren erfassen.

Der negative Pol der Gleichspannung wird an die Elektrode angelegt, der positive Pol wird über Erdkontakte 16 in den Boden abgeleitet.

Hilfsräder 18 sind höhenverstellbar und dienen zum Abstellen der Vorrichtung, wenn diese nicht verwendet wird.

Am Schaltschrank 9 sind verschiedene Bedienungselemente und Anzeigen 19 angebracht, weiters sind Steckdosen 20 vorgesehen, um zusätzliche Elektrogeräte mit Energie versorgen zu können. Eine Warnleuchte 21 dient zum Hinweis auf mögliche Gefährdungen.

## Patentansprüche

1. Vorrichtung zum Auslichten von Wildkräutern mit einem Gehäuse (3), das mit Rollen (10) in einem vorbestimmten Abstand über den Boden zu führen ist, in welchem Gehäuse (3) eine Elektrode (11) zur Aufnahme einer Hochspannung vorgesehen ist und mit Erdkontakten (16) zur Herstellung einer Erdung sowie mit einer Stromversorgungseinrichtung, die eine Hochspannung zwischen der Elektrode (11) und den Erdkontakten (16) aufbaut, um Wildkräuter durch Stromschläge abzutöten, **dadurch gekennzeichnet, dass** im Bereich des Gehäuses (3) Infrarotbewegungsmelder (14) vorgesehen sind, die auf eine Annäherung eines Menschen oder eines Tieres auf eine vorbestimmte Distanz ansprechen, um die Vorrichtung (2) im Betrieb zu sichern und dass weiters ein Metallsensor vorgesehen ist, um Metallgegenstände im Bereich der Elektrode (11) zu erfassen.

2. Vorrichtung nach Anspruch 1, **dadurch gekennzeichnet, dass** die Stromversorgungseinrichtung dazu ausgebildet ist, an der Elektrode (11) eine negative Gleichspannung anzulegen.

3. Vorrichtung nach einem der Ansprüche 1 bis 2, **dadurch gekennzeichnet, dass** an den Rollen (10) Druckschalter vorgesehen sind, die die Hochspannung unterbrechen, wenn die Vorrichtung (2) vom Boden abgehoben wird.

4. Vorrichtung nach einem der Ansprüche 1 bis 3, **dadurch gekennzeichnet, dass** die Elektrode (11) als Draht oder Stange ausgebildet ist und in der Gebrauchsstellung der Vorrichtung (2) waagrecht über dem Boden angeordnet ist.

5. Vorrichtung nach einem der Ansprüche 1 bis 4, **dadurch gekennzeichnet, dass** die Vorrichtung eine Kupplung zur Befestigung an einem selbstfahrenden Arbeitsgerät aufweist und dass im Gehäuse (3) ein Generator (7) vorgesehen ist, der über eine Zapfwelle (5) vom Arbeitsgerät angetrieben ist.

6. Vorrichtung nach Anspruch 5, **dadurch gekennzeichnet, dass** an den Generator (7) ein Transformator (8) vorgesehen ist, um die Spannung am Ausgang des Generators (7) auf einen Wert zwischen 500 und 20.000 Volt, vorzugsweise zwischen 1.000 und 12.000 Volt zu erhöhen.

7. Vorrichtung nach Anspruch 5 oder 6, **dadurch gekennzeichnet, dass** im Gehäuse (3) ein Getriebe (6) vorgesehen ist, das die Drehzahl der Zapfwelle (5) zum Antrieb des Generators (7) erhöht.

8. Vorrichtung nach einem der Ansprüche 5 bis 7, **dadurch gekennzeichnet, dass** am Ausgang des Generators (7) Stromanschlüsse zum Antrieb von weiteren elektrischen Geräten vorgesehen sind.

9. Vorrichtung nach einem der Ansprüche 5 bis 8, **dadurch gekennzeichnet, dass** an einem Fahrersitz des Arbeitsgerätes ein Sensor vorgesehen ist, der bei Verlassen des Fahrersitzes die Stromzufuhr unterbricht.

10. Vorrichtung nach einem der Ansprüche 1 bis 4, **dadurch gekennzeichnet, dass** die Vorrichtung zur Aufnahme auf einem Gleisfahrzeug vorgesehen ist und von diesem oder über eine Oberleitung mit Strom versorgt wird.

## Claims

1. An apparatus for removing weeds, comprising a housing (3) which is guided with rollers (10) at a predetermined distance over the ground, which housing (3) comprises an electrode (11) for receiving a high voltage, and with earth contacts (16) for producing a connection to ground and with a power supply device for building a high voltage between the electrode (11) and the earth contacts (16) in order to destroy weeds by electric shocks, **characterized in that** infrared motion detectors (14) are provided in the region of the housing (3) which respond to the approach of a person or animal at a predetermined distance in order to secure the apparatus (2) during operation, and that further a metal sensor is provided in order to detect metal objects in the region of the electrode (11).

2. An apparatus according to claim 1, **characterized in that** the power supply device is configured in order to feed a negative direct voltage to the electrode (11).

3. An apparatus according to one of the claims 1 to 2, **characterized in that** pressure switches are provided on the rollers (10) which interrupt the high voltage when the apparatus (2) is lifted from the ground.

4. An apparatus according to one of the claims 1 to 3, **characterized in that** the electrode (11) is configured as a wire or rod and is arranged horizontally above the ground in the operating position of the apparatus (2).

5. An apparatus according to one of the claims 1 to 4, **characterized in that** the apparatus comprises a coupling for fastening to an automotive machine and that a generator (7) is provided in the housing (3) which is driven by the machine by way of a power take-off shaft (5).

6. An apparatus according to claim 5, **characterized in that** a transformer (8) is provided on the generator (7) in order to increase the voltage at the output of the generator (7) to a value of between 500 and 20,000 volts, preferably between 1,000 and 12,000 volts.

7. An apparatus according to claim 5 or 6, **characterized in that** a transmission (6) is provided in the housing (3) which increases the speed of the power take-off shaft (5) for driving the generator (7).

8. An apparatus according to one of the claims 5 to 7, **characterized in that** terminals are provided at the output of the generator for driving further electric devices.

9. An apparatus according to one of the claims 5 to 8, **characterized in that** a sensor is provided at the driver's seat of the machine which cuts off the power supply when the driver leaves the driver's seat.

10. An apparatus according to one of the claims 1 to 4, **characterized in that** the apparatus is configured for being received on a rail vehicle and is supplied by the same with current by way of an overhead line.

## Revendications

1. Dispositif pour éclaircir des mauvaises herbes comportant un boîtier (3) conduit par des galets (10) à une distance prédéterminée au-dessus du sol, ce boîtier (3) ayant une électrode (11) pour recevoir une haute tension et des contacts de masse (16) pour faire la masse ainsi qu'une installation d'alimentation électrique appliquant une haute tension entre l'électrode (11) et les contacts de masse (16) afin de détruire les herbes sauvages ou mauvaises herbes par des chocs de courant,
**caractérisé en ce que**
des dispositifs de signalisation de mouvement par infrarouge (14) au niveau du boîtier (3) se mettent en oeuvre à proximité d'un humain ou d'un animal, à une distance prédéterminée pour protéger le dispositif (2) en fonctionnement et il est également prévu un capteur de métal pour saisir les objets métalliques au voisinage de l'électrode (11).

2. Dispositif selon la revendication 1,
**caractérisé en ce que**
l'alimentation électrique est formée pour appliquer une tension continue négative à l'électrode (11).

3. Dispositif selon l'une des revendications 1 et 2,
**caractérisé en ce que**
les galets (10) comportent des boutons poussoir qui coupent la haute tension lorsque le dispositif (2) est soulevé du sol.

4. Dispositif selon l'une des revendications 1 à 3,
**caractérisé en ce que**
l'électrode (11) est en forme de fil ou de tige et en position d'utilisation du dispositif (2) elle est horizontale par rapport au sol.

5. Dispositif selon l'une des revendications 1 à 4,
**caractérisé en ce que**
le dispositif comporte un moyen d'attelage pour être fixé à une machine automotrice et le boîtier (3) comporte un générateur (7) entraîné à partir de la prise de force (5) de la machine.

6. Dispositif selon la revendication 5,
**caractérisé en ce que**
le générateur (7) est équipé d'un transformateur (8) pour augmenter la tension à la sortie du générateur (7) et arriver à une valeur comprise entre 500 et 20 000 Volts et de préférence entre 1 000 et 12 000 Volts.

7. Dispositif selon la revendication 5 ou 6,
**caractérisé en ce que**
le boîtier (3) comporte une transmission (6) qui augmente la vitesse de rotation de la prise de force (5) pour entraîner le générateur (7).

8. Dispositif selon l'une des revendications 5 à 7,
**caractérisé en ce que**
la sortie du générateur (7) comporte des branchements pour entraîner d'autres appareils électriques.

9. Dispositif selon l'une des revendications 5 à 8,
**caractérisé par**
un capteur équipant le siège du conducteur de la machine qui coupe l'alimentation électrique lorsqu' on quitte le siège.

10. Dispositif selon l'une des revendications 1 à 4,
**caractérisé en ce que**
le dispositif est destiné à être installé sur un véhicule ferroviaire qui l'alimente directement en courant ou par une ligne aérienne.
